# EUROPEAN PATENT APPLICATION

(11) **EP 2 806 384 A1**
(43) Date of publication of application: **26.11.2014**
(21) Application number: 13168515.8
(22) Date of filing: 21.05.2013
(51) Int. Cl.: G06Q 10/08

(54) **System for managing locations of items**

(71) Applicant: Fonella Oy, 88610 Vuokatti (FI)
(72) Inventor: Kolehmainen, Ville, 87250 Kajaani (FI)
(74) Representative: Kolster Oy Ab

(57) **Abstract**

This document discloses a solution for maintaining information on locations of consumer products in a store. Customers are provided with personal electronic devices comprises a scanner arranged to scan labels of consumer products provided in the store. The locations of the customers are also tracked in the store. The locations of the products may be maintained by monitoring locations where the personal electronic devices scan the labels of the consumer products.

## Description

### Field

The invention relates to the field of tracking locations of objects (particularly lifeless assets or items) and a system for managing the locations of such objects.

### Background

Location tracking systems are typically used for tracking mobile objects such as people or mobile assets. Several technologies are applicable to the location tracking, such as IEEE 802.11 (WiFi), radio frequency identification (RFID), Bluetooth®, and Global Positioning System (GPS).

### Brief description

The invention is defined by the independent claims.

Embodiments of the invention are defined in the dependent claims.

### List of drawings

Embodiments of the present invention are described below, by way of example only, with reference to the accompanying drawings, in which
Figure 1 illustrates a layout of a store in which embodiments of the invention may be utilized;
Figure 2 illustrates a personal electronic device that may be used for scanning labels of consumer products and for tracking location of a customer in the store;
Figure 3 illustrates a signalling diagram of a procedure for maintaining locations of consumer products according to an embodiment of the invention;
Figures 4 to 6 illustrate embodiments of the procedure of Figure 3;
Figure 7 illustrates a flow diagram of a process for preventing false updates according to an embodiment of the invention; and
Figures 8 and 9 illustrate block diagrams of apparatuses according to some embodiments of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

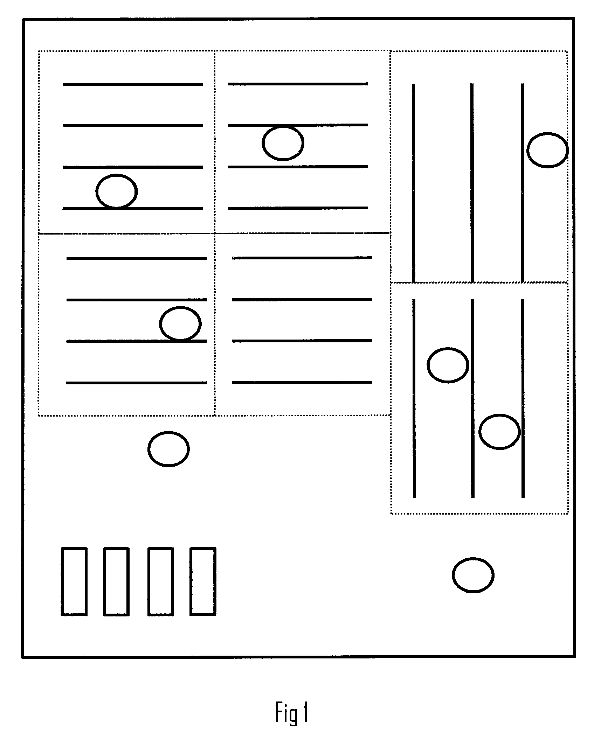

Let us now describe a context to which embodiments of the invention may be applied. Figure 1 illustrates a layout of a store. The store may be any store where customers buy goods or consumer products, e.g. a supermarket, an electronics store, a convenience store, etc. The store may be a store where numerous products are sold although embodiments of the invention are applicable to stores with a modest number of different types of products. As known, numerous consumer products are disposed in the store at respective locations. The consumer products may be disposed on shelves etc. illustrated in Figure 1 by straight lines. Passages may be provided between the shelves. The consumer products may be divided into categories, and products of the same category may be disposed close to each other, as shown in Figure 1 by dotted rectangles. Customers represented by circles travel in the store and pick up the products they are interested in buying. After picking up all the products a customer intends to buy, the customer may proceed to a cashier or a check out point represented by solid rectangles in Figure 1.

A single customer probably does not travel all the passages of the store but, when a higher number of customers has visited the store, all the passages will be travelled. Similarly, a single customer probably does not pick up all the consumer products of the store but, with a sufficient number of customers, all the products of the store will be picked up.

It is typical for a conventional store that locations of the consumer products are changed because of new layout design, renovations, etc. It is also convenient to maintain a record of locations of the products, e.g. on a computer. Maintaining such a record up-to-date manually is, however, difficult because of human errors and oversights and a huge number of different types of products. Checking the current locations of the products and cross-checking the locations of the products with corresponding locations stored in the computer by the staff regularly consumes huge amount of resources and is impractical even with the help of some automation.

Embodiments of the invention utilize the customers that pick up the consumer products and travel throughout the consumer store to maintain the record of the current locations of the consumer products. As described above, all the products will be picked up and all the locations visited given a sufficient number of customers.

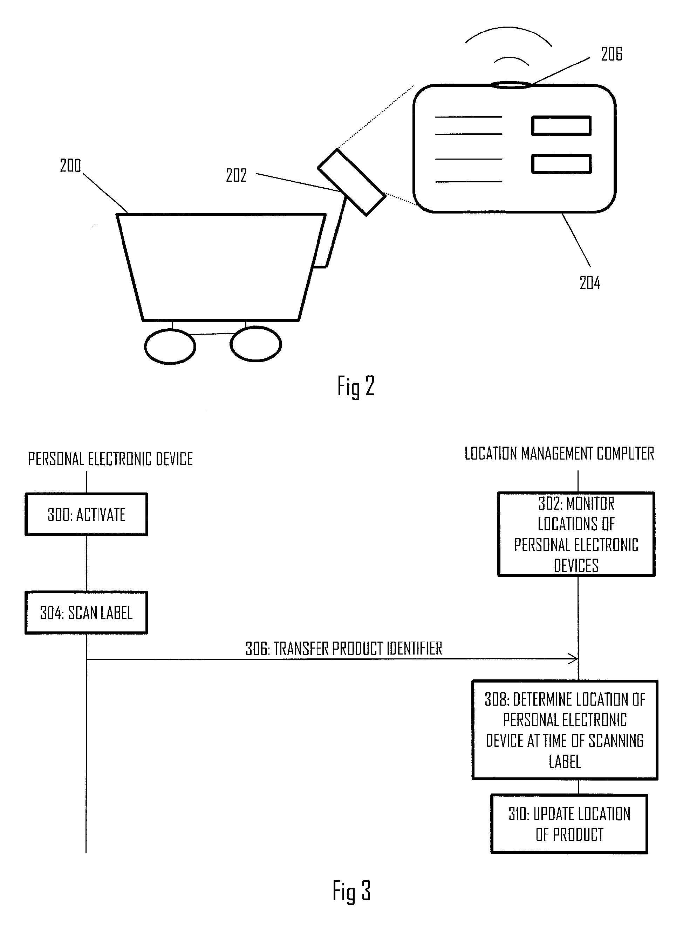

Each customer may be provided with a personal electronic device, and the customers may use their personal electronic devices to mark consumer products they intend to buy as they move throughout the store. Figure 2 illustrates an embodiment of such a personal electronic device 204 which may be attached to a shopping cart 200, for example. The personal electronic device may be portable, and the shopping cart 200 may comprise a docking station 202 for the personal electronic device 204, or the personal electronic device 204 may be integrated into the shopping cart 200. In an embodiment, the personal electronic device 204 is a tablet computer. In other embodiments, the personal electronic device may be a smart phone or a dedicated digital shopping assistant device.

The personal electronic device 204 may comprise a display unit, a processor, and a memory storing a computer program code. The device 204 may further comprise an input device enabling user inputs. The personal electronic device 204 may further comprise a scanner 206 configured to provide the device 204 with an ability to scan labels of the consumer products. The scanner 206 may comprise a bar code reader, a smart code reader, an induction label reader, a radio frequency identification (RFID) reader capable of reading RFID tags, a near-field communications (NFC) reader, or another type of proximity reader configured to scan and read labels within a proximity of the reader. The scanner may be considered as a proximity sensor able to detect the presence of nearby objects without any physical contact. A range of the scanner may be limited to one or two meters or less. In another embodiment, the scanner comprises a camera sensor, e.g. a charge-coupled device (CCD). The labels of the products may be read visually by an image recognition algorithm from one or more camera images.

The personal electronic device 204 may be configured to display through the display unit a shopping list comprising consumer products that have been scanned with the scanner. The personal electronic device 204 may further be configured to display advertisement based on the location of the personal electronic device 204 in the store. The personal electronic device 204 may further comprise a location tracking module configured to track the location of the personal electronic device in the store.

Let us now describe embodiments of the invention in greater detail with reference to signalling diagrams of Figures 3 to 6. Figure 3 illustrates a general procedure for maintaining a record of the locations of the consumer products in the store by utilizing the personal electronic devices such as that described above with reference to Figure 2. As described above, each customer may be provided with a customer-specific personal electronic device. Referring to Figure 3, the personal electronic device may be activated in step 300 when a customer enters the store and assumes the personal electronic device. The activation may comprise setting the personal electronic device into a state where it is ready to scan the labels and where its location may be tracked. The locations of the personal electronic device may be monitored by a location management computer in block 302.

The location of the personal electronic devices may be tracked by employing a location tracking system. The location tracking system may be embedded into the personal electronic devices, or a physically separate location tracking system may be provided. The location tracking system may comprise an indoor location tracking system. Some embodiments provide the personal electronic device with a capability of autonomously determining its location or at least information from which the location may be derived. Such embodiments may utilize magnetic field measurements measuring Earth's magnetic field, a radio map measurements measuring radio signatures, etc. The embodiments employing the Earth's magnetic field provide an accurate method for determining the location both indoors and outdoors, since the Earth's magnetic field signature is unique for each location. With an appropriate initialization of the location tracking system and gathering of reference signatures of different locations, the location of the personal electronic device may be determined very accurately. The personal electronic device may be configured to measure the magnetic fields and send the magnetic field values to the location management computer, and the location management computer may compare the received magnetic field values with the reference data in order to determine the location of the personal electronic device. In some embodiments, the personal electronic device may itself carry out the comparison and send the location to the location management computer as coordinate values. The coordinates may comprise horizontal plane coordinates (x, y) and, in some embodiments, also vertical coordinates (z) in the form of a level or a floor. The embodiments employing the radio map may comprise a plurality of radio transmitters disposed in the store and arranged to transmit radio signals. A superposition of the radio signals provides a unique signature at each location in the store. The personal electronic device may then measure these radio signals it receives from different radio transmitters, e.g. received signal strength, and transmit a measurement report to the location management computer. The location management computer may then compare the received radio measurement values with reference data gathered during a setup phase in order to determine the location of the personal electronic device. In some embodiments, the personal electronic device may itself carry out the comparison and send the location to the location management computer as coordinate values. It should be appreciated that the invention is not limited to these location tracking techniques, and virtually any location tracking system providing a desired accuracy may be used, e.g. a state-of-the-art system based on RFID location tracking, Bluetooth location tracking, etc.

In block 304, the scanner of the personal electronic device is configured to scan a label of a consumer product. The consumer product may be picked by the customer, and the execution of block 304 may be triggered by a user input. As a result, the personal electronic device stores an identifier of the scanned consumer product comprised in the scanned label. According to another aspect, the personal electronic device may store information comprising the identifier of the scanned consumer product. As described above, the personal electronic device may be equipped with an algorithm for identifying the product from the scanned label. This may comprise determining a name and/or a price of the product and outputting corresponding information through the display unit of the device. Such an output serves also as an indication of the successful scanning to the user.

In some embodiments, the scanner may be omitted and the user may read the labels and input identifiers of the products manually, e.g. through a keypad or a keyboard of the personal electronic device. Description below focuses on the embodiments employing the scanner.

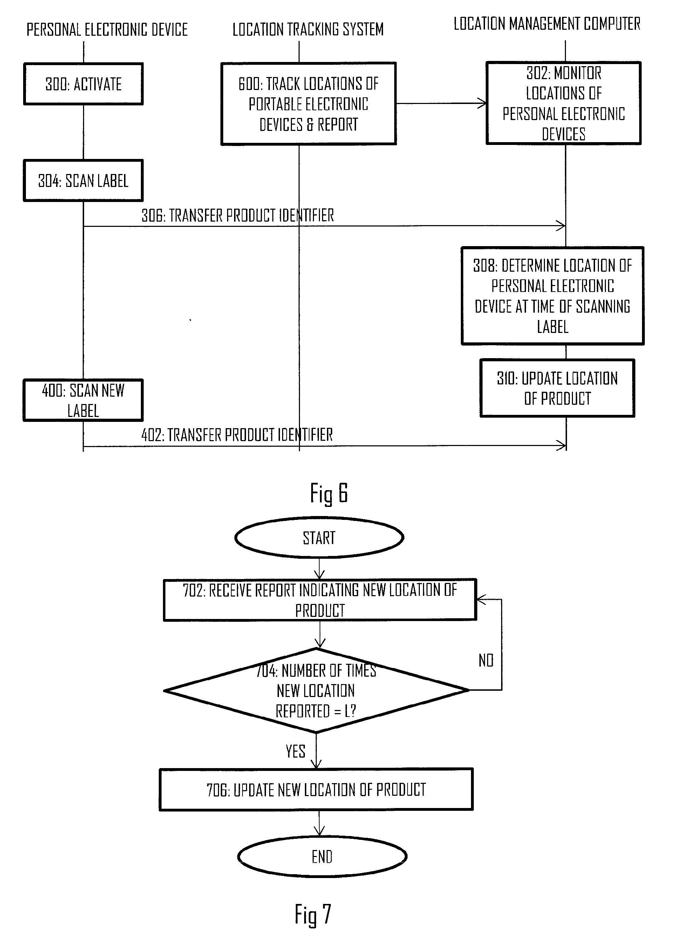

In step 306, the personal electronic device sends the information acquired during said scanning and identifying the consumer product to the location management computer, and the location management computer receives the information. In block 308, the location management computer determines a location of the personal electronic device at the time of scanning the label. Below, some embodiments for carrying out block 308 are described. In block 310, the location management computer updates the determined location of the personal electronic device as a new location of consumer products of the same type as said consumer product. The same type may be considered to refer to products that are identical with the scanned product. Figure 7 illustrates an embodiment of block 310. Block 310 may be executed when the location management computer detects that the location determined in block 308 differs from the stored location of the consumer product. Otherwise, the location management computer may maintain the stored location of the consumer product.

As a consequence, embodiments of the present invention combine the location tracking of customers with the shopping assistant device scanning the labels of the products the customer intend to buy and provide a method for maintaining up-to-date record of current locations of the consumer products. Even a small convenience store serves hundreds or even thousands customers per day, which provides sufficient statistics to ensure that the changes in the locations of the consumer products are detected and updated quickly.

The personal electronic device may display a list of scanned products, their respective prices, and a total sum, for example. In an embodiment, the personal electronic device is configured to allow the user to remove a product from the list of scanned products. The user may input a removal command through a user input device of the personal electronic device and, as a consequence, the processor is configured to remove the indicated product from the list and recalculate the total sum. The removal may not cause transmission of a cancellation command to the server and, as a consequence, it does not cancel the update of the location update of the removed product.

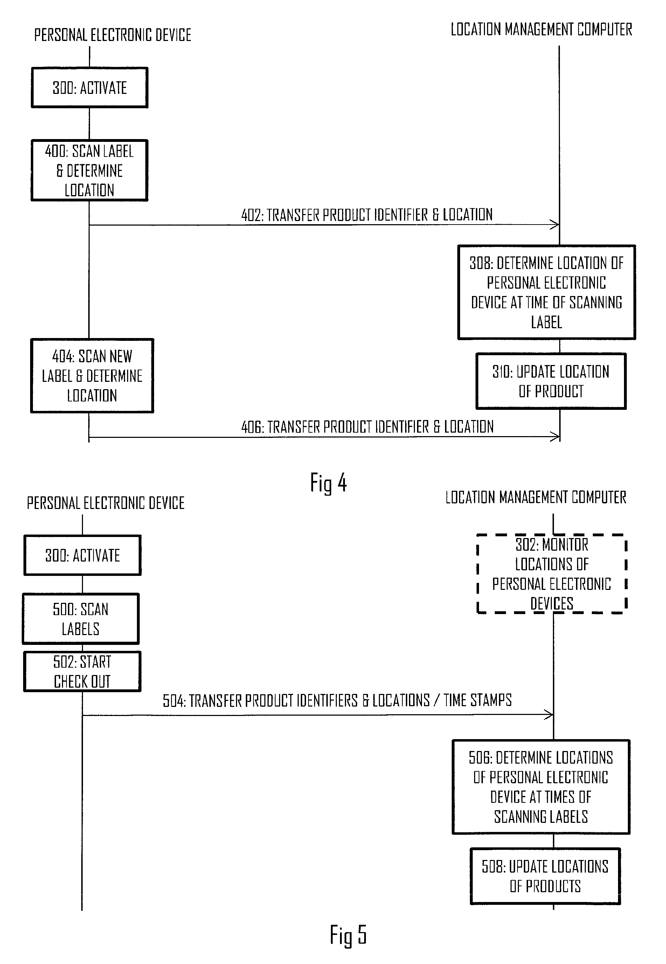

Let us now describe some embodiments for transferring the information identifying the scanned consumer products to the location management computer with reference to Figures 4 and 5. In the Figures, the steps or operations having the same reference numbers in different Figures refer to the same or substantially similar steps or operations. Referring to Figure 4, the personal electronic device is configured to send the information identifying the scanned consumer products as they are scanned. In block 400, the personal electronic device is configured to scan a label of a consumer product. The scanning or an input command to start the scanning of the product may also trigger location determination in the personal electronic device such that the current location of the personal electronic device is measured substantially at the same time as the scanning is performed. In step 402, the personal electronic device sends the information identifying the product and information indicating the determined location to the location management computer as soon as the scanning and the location determination have been completed. Then, the location management computer may determine the product and its scanning location in block 308 and update the location of the product in the database, if necessary.

Thereafter, the personal electronic device is configured to scan a new label in block 404, and the procedure of steps 400, 402 is repeated in steps 404, 406. In this manner, the personal electronic device transmits the newly scanned product identifiers and the corresponding locations to the location management computer on the fly.

In an embodiment of Figure 4, the personal electronic device may bundle a plurality of product identifiers and corresponding locations and send the bundled information together in determined reporting intervals. The personal electronic device may employ a determined periodicity in the reporting. As a consequence, a single transmission may comprise a plurality of product identifiers and corresponding location information, and the personal electronic device may send a plurality of such reports during a single shopping session.

Communication between the personal electronic device and the location management computer may be realized by using state-of-the-art communication methods. The communication may be based on a wireless local area network installed in the store, or it may comprise a radio link of a cellular communication system such as GSM (Global System for Mobile Communications) or UMTS (Universal Mobile Telecommunication System). Other wireless communication methods are equally possible.

In the embodiment of Figure 5, the personal electronic device is configured to send the product identifiers and corresponding information indicating the locations of the personal electronic when the user is checking out, e.g. in the cashier. Referring to Figure 5, the personal electronic device is configured to scan the labels of the consumer products in the above-described manner in block 500. In connection with each scanning, the personal electronic device may measure the information indicating the current location of the personal electronic device. In such an embodiment, the location management computer 302 may omit the constant monitoring of the locations of the personal electronic devices, because the devices themselves measure the locations. In another embodiment, the location management computer may monitor the locations in block 302 and store in a location database information on the movement of the personal electronic devices. Such information may comprise location and timing enabling the location management computer to determine afterwards at which location a given personal electronic device was at a given time instant. In such an embodiment, the personal electronic device may store a time stamp indicating the time of scanning the label in block 500. In step 502, the personal electronic device receives an input signal indicating that the user is about to check out and pay. The input signal may be received through the user input device or it may be detected by other means, e.g. the user's location is determined to be in the cashier area. As a consequence, the personal electronic device is configured to send the product identifiers and the corresponding time stamps to the location management computer (step 504).

In block 506, the location management computer determines the location of the terminal device with respect to each label scanning operation. In the embodiment where the personal electronic device reports the respective locations as the coordinates or location measurement values, the procedure may be carried out in the above-described manner. In the embodiment where the terminal device provides a time stamp in connection with each product identifier, the location management computer may retrieve from the location database a location of the personal electronic device at the time instant indicated by the received time stamp and compare the retrieved location with the current location of the product having the product identifier associated with the received time stamp and stored in the record maintained by the location management computer. If the location of the product as determined from the location of the personal electronic device matches with the location of the product stored in the record, no update is necessary. Otherwise, the location management computer may update the location of the product (block 508).

Figure 6 illustrates yet another embodiment where an external location tracking system is used to track the locations of the personal electronic devices in the store. The location tracking system may comprise a plurality of base stations disposed in the store, and each base station may be configured to detect the personal electronic devices within a sub-area of the store. Collective coverage of the base stations may cover the whole store. The base stations may employ state-of-the-art techniques for determining the locations of the personal electronic devices in their respective coverage areas. In this embodiment, the base stations report to the location management computer the locations of the personal electronic devices, e.g. a single base station may report those personal electronic devices it has detected in its coverage area (block 600). In this manner, the location management computer may monitor the locations of the personal electronic devices in block 302. This embodiment is illustrated as combined with the embodiment of Figure 4 but it may be combined with the embodiment of Figure 5 in a straightforward manner. In block 304, the personal electronic device scans the label and reports a corresponding product identifier to the location management computer in 306. In block 308, the location management computer may determine the location of the personal electronic device at the time of receiving the product identifier in step 306 or it may use a more sophisticated method for estimating the location of the personal electronic device at the time of actual scanning. Upon determining the location of the personal electronic device, the location of the reported product may be updated, if necessary.

Some customers may forget to scan the labels at the time of picking up the consumer product from the shelf. If the product is scanned in a location which differs substantially from the correct location of the product in the store, this may lead to temporary false information in the product location record stored in the location management computer. Figure 7 illustrates an embodiment which avoids such erroneous location updates. Referring to Figure 7, the location management computer receives a report from a personal electronic device that indicates a new location of a consumer product. Block 702 may be executed as a result of block 308 or 506 and comparison between the location of the product as determined on the basis of the report from the personal electronic device and the location of the product as stored in the record. In block 704, the location management computer checks a number of times the new location of the product has now been reported. If the number of times equals to a determined threshold number higher than one, the process proceeds to block 706 in which the location of the product is updated in the record. Otherwise, the process suspends to wait for another report indicating the new location of the same product. In summary, the location management computer updates the new location only after it has received multiple reports indicating that the location of the product has changed. Accordingly, a single scanning operation performed in an incorrect location does not trigger a false update in the location management computer.

In an embodiment of Figure 7, the process proceeds to block 706 only if the new location is reported multiple times consecutively. If a different location is reported for the product at any point during the process of Figure 7, the process may end. As an example, let us consider an example where the real location of the product is X1,Y1 and that location is also stored in the record. The location management computer then receives a report from a personal electronic device indicating that the location of the product is X2, Y2, and the location management computer increments a counter counting the number of times a new location has been reported. Subsequently, the location management computer receives another report indicating that the location of the product is X3, Y3. This may cause the location management computer to reset the counter and increment it by one to count only the latest location reported. If the newly reported location is the real location X1, Y1, the location management computer may reset the counter without incrementing it.

In another embodiment of Figure 7, the process proceeds to block 706 only if the new location is reported by at least two different personal electronic devices. The location management computer may be configured to verify before the update that the different personal electronic devices both indicate the same new location for the same consumer product type.

In yet another embodiment of Figure 7, the process proceeds to block 706 only if the new location is reported multiple times and not within a determined guard time. This prevents an erroneous update in a situation where a customer scans multiple products of the same type in a different location than the real location of the product. The location management computer may start a timer counting the guard time when it receives a first message indicating that the location of a consumer product has changed. If it receives another message indicating the same new location of the consumer product after the expiry of the guard time, it may update the reported location as the new location of the product. Any message indicating the new location of the product and received during the guard time may be discarded without effect on the update.

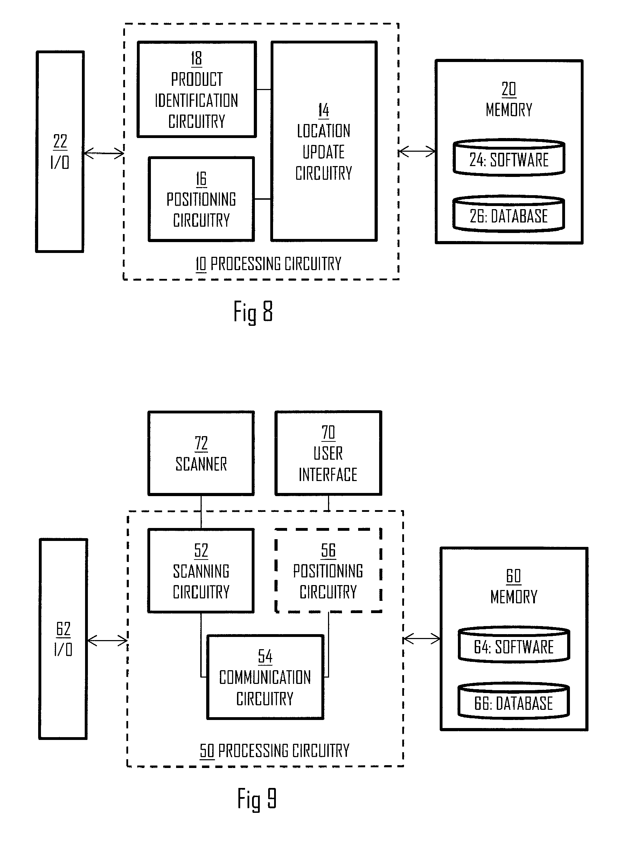

Figure 8 illustrates a block diagram of an apparatus according to an embodiment of the invention. The apparatus may comprise the above-described location management computer. The apparatus may be a server computer provided with communication and computation capabilities. In another embodiment, the apparatus is a circuitry within such a server computer, e.g. a processor or a chipset. Referring to Figure 8, the apparatus may comprise at least one processor or a processing circuitry 10 and at least one memory 20 including a computer program code 24, wherein the at least one memory 20 and the computer program code 24 are configured, with the at least one processing circuitry 10, to cause the apparatus to carry out the above-described embodiments of the location management computer. The apparatus may further comprise an input/output (I/O) interface 22 providing the apparatus with communication capability. The I/O interface 22 may comprise a network adapter configured to operate according to one or more wireless or wired communication specifications. The I/O interface 22 may be capable of establishing communication connection with the personal electronic devices and to receive the above-described product identifiers and location information from the personal electronic devices.

The processing circuitry 10 may comprise a product identification circuitry configured to process the product identifiers or information containing the product identifiers and to identify the consumer products the personal electronic devices have scanned. The processing circuitry 10 may comprise a positioning circuitry 16 configured to determine the location of the personal electronic device at the time of scanning the label. Upon receiving a message from a personal electronic device, the processing circuitry 10 may cause the product identification circuitry 18 to determine the product(s) the personal electronic device has scanned and the positioning circuitry 16 to determine the location(s) of the personal electronic device at the time(s) of scanning the product(s).The product identification circuitry 18 and the positioning circuitry 16 may output the results to a location update circuitry 14 configured to combine a product identifier received from the product identification circuitry with a location received from the positioning circuitry and, thus, derive a current location of the identified product. The location update circuitry 14 may then cross-reference the current location of the product with a location database 26 storing the record of the locations of the consumer products. If the current location of the product matches with the location of the product stored in the location database 26, the location update circuitry 14 may determine that the stored location of the product is up-to-date and no update is needed. On the other hand, if the current location of the product does not match with the location of the product stored in the location database 26, the location update circuitry 14 may update the location of the product according to one of the embodiments described above.

The circuitries 14 to 18 may be comprised as sub-circuitries in the processing circuitry 10. The circuitries 14 to 18 may be considered to be realized as computer program modules defined by the computer program code 24.

Figure 9 illustrates a block diagram of another apparatus according to an embodiment of the invention. The apparatus may comprise the above-described location management computer. The apparatus may be a personal electronic device provided with communication and computation capabilities. In another embodiment, the apparatus is a circuitry within such a personal electronic device, e.g. a processor or a chipset. Referring to Figure 9, the apparatus may comprise at least one processor or a processing circuitry 50 and at least one memory 60 including a computer program code 64, wherein the at least one memory 60 and the computer program code 64 are configured, with the at least one processing circuitry 50, to cause the apparatus to carry out the above-described embodiments of the personal electronic device. The apparatus may further comprise an input/output (I/O) interface 62 providing the apparatus with communication capability. The I/O interface 62 may comprise a wireless network adapter configured to operate according to one or more wireless communication specifications, e.g. IEEE 802.11 protocol or a cellular communication protocol. The I/O interface 62 may be capable of establishing communication connection with the location management computer and to transmit the above-described product identifiers and location information to the location management computer.

The apparatus may further comprise a scanner 72, e.g. a bar code reader, an RFID reader, an NFC reader, a smart code reader, or an induction label reader. The operation of the scanner may be controlled by the processing circuitry 50. The apparatus may further comprise a user interface 70 comprising a display screen and a user input device. The display screen and the user input device may be combined in the form of a touch-sensitive display.

The processing circuitry 10 may comprise a scanning circuitry 52 configured to control the scanner 72 and to process the scanned labels. The scanning circuitry 52 may cause scanner 72 to carry out scanning upon receiving a scanning command through the user interface 70 and to analyse the scanned information, e.g. by interpreting information stored in the label, the information identifying a product of the scanned label. The scanning circuitry may then output the information to a communication circuitry 54 for the transmission to the location management computer. The apparatus may optionally comprise a positioning circuitry 56 configured to measure the current location of the personal electronic device. The operation of the positioning circuitry may be triggered by the scanning command received through the interface or by a control signal applied to the positioning circuitry at the time of scanning the label. The positioning circuitry 56 may then acquire measurement data enabling the positioning of the personal electronic device. The acquisition of the measurement data may comprise measuring a prevailing magnetic field or a radio map, for example. The positioning circuitry 56 may then output the measurement data to the communication circuitry 54. The positioning circuitry 56 may in some embodiments determine the location of the personal electronic device from the measurement data, e.g. by cross-referencing the measurement data with a location database 66 storing mapping between measurement data and location coordinates in the store. The location database 66 may be stored in the memory 60 of the apparatus.

In an embodiment of Figure 5, the positioning circuitry 56 may be replaced by a timer counting time, and the timer may be controlled to output the above-described time stamp when the scanning is performed. The communication circuitry 54 may then form a message comprising the information identifying the scanned product and the location information or the time stamp and cause the I/O circuitry 62 to transmit the message to the location management computer.

Upon receiving the scanned identifier of the product from the scanning circuitry, the processing circuitry 50 may be configured to cross-reference the identifier with a database storing mappings between the identifiers and names and/or prices of the products. The processing circuitry may then output the name and/or the price of the product to the display screen for display to the user.

The circuitries 54 to 56 may be comprised as sub-circuitries in the processing circuitry 50. The circuitries 54 to 56 may be considered to be realized as computer program modules defined by the computer program code 64.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 3 to 7 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The description above is intended for illustrative purposes and not to limit the invention to the described embodiments. Therefore, all words and expressions should be interpreted broadly and they are intended to illustrate, not to restrict, the embodiments. It will be obvious to a person skilled in the art that, as technology advances, the inventive concept can be implemented in various ways. The invention and its embodiments are not limited to the examples described above but may vary within the scope of the claims.

## Claims

1. A method for managing, by a location management computer, locations of consumer products in a store, the method comprising:
providing a customer-specific personal electronic device;
tracking location of the personal electronic device by employing a location tracking system;
means for acquiring, in the personal electronic device, information identifying a consumer product from a label associated with the consumer product;
transferring, by the personal electronic device, the information identifying the consumer product to the location management computer;
determining, by the location management computer, a location of the personal electronic device at the time of acquiring the information identifying the consumer product; and
updating, by the location management computer, the determined location of the personal electronic device as a new location of consumer products of the same type as said consumer product.

2. The method of claim 1, further comprising in the location management computer:
in response to reception of the information identifying the consumer product from the personal electronic device and determining the location of the personal electronic device at the time of acquiring the information identifying the consumer product, checking a consumer product location database for a current location of the consumer products of the same type as said consumer product;
if the current location of the consumer products of the same type as said consumer product matches with the determined location of the personal electronic device at the time of acquiring the information identifying the consumer product, maintaining the current location of the consumer products; and
if the current location of the consumer products of the same type as said consumer product does not match with the determined location of the personal electronic device at the time of acquiring the information identifying the consumer product, updating the determined location of the personal electronic device as the current location of the consumer products of the same type as said consumer product.

3. The method of claim 1 or 2, further comprising:
determining, by the personal electronic device at the time of acquiring the information identifying the consumer product, location information indicating a current location of the personal electronic device; and
transferring, by the personal electronic device, the location information together with the information identifying the consumer product to the location management computer.

4. The method of claim 1 or 2, further comprising:
determining, by the location tracking system, a location of the personal electronic device at different time instants;
transferring, by the location tracking system, location information associated with each determined location of the personal electronic device and corresponding time stamps to the location management computer;
transferring, by the personal electronic device, the information identifying the consumer product and a time stamp defining a timing of said acquiring the information identifying the consumer product to the location management computer;
mapping, by the location management computer, the information identifying the consumer product with the location of the personal electronic device on the basis of time stamps received from the location tracking system and the personal electronic device.

5. The method of any preceding claim, wherein the personal electronic device comprises a scanner for scanning labels of the consumer products, wherein said information identifying the consumer product is acquired by scanning the label of the consumer product with the scanner, and wherein the location management computer determines the location of the personal electronic device at the time of scanning the label.

6. The method of claim 5, wherein the scanning is at least one of the following: a bar code scanning, a smart code scanning, an induction tag scanning, a radio frequency identification tag scanning or a near field communication tag scanning.

7. The method of any preceding claim, further comprising in the location management computer: updating the location of the consumer products of the same type only after receiving at least two indications that the location of the consumer products of the same type has changed.

8. A system for managing locations of consumer products in a store, the system comprising:
at least one personal electronic device;
a location tracking system configured to track location of the at least one personal electronic device; and
a location management computer comprising at least one processor and at least one memory including a computer program code and a location database storing locations of different types of consumer products in the store, wherein the at least one memory and the computer program code are configured, with the at least one processor, to cause the location management computer to acquire an identifier acquired by a personal electronic device and identifying the consumer product, to determine a location of the personal electronic device at the time of acquiring the identifier in the personal electronic device, and to update the determined location of the personal electronic device as a new location of consumer products of the same type as said scanned consumer product.

9. The system of claim 8, wherein the at least one memory and the computer program code are configured, with the at least one processor, to cause the location management computer to:
in response to reception of the identifier from the personal electronic device and determining the location of the personal electronic device at the time of acquiring the identifier in the personal electronic device, check the location database for a current location of the consumer products of the same type as said consumer product;
if the current location of the consumer products of the same type as said consumer product matches with the determined location of the personal electronic device at the time of acquiring the identifier in the personal electronic device, maintain the current location of the consumer products; and
if the current location of the consumer products of the same type as said consumer product does not match with the determined location of the personal electronic device at the time of acquiring the identifier in the personal electronic device, update the determined location of the personal electronic device as the current location of the consumer products of the same type as said consumer product.

10. The system of claim 8 or 9, wherein the personal electronic device is configured to determine, at the time of acquiring the identifier in the personal electronic device, location information indicating a current location of the personal electronic device and to transfer the location information together with the identifier to the location management computer.

11. The system of claim 8 or 9, wherein the location tracking system is configured to determine locations of a plurality of personal electronic devices at different time instants and to transfer location information associated with each determined location of the personal electronic devices and corresponding time stamps to the location management computer,
wherein the personal electronic device is configured to transfer the identifier of the consumer product and a time stamp defining a timing of said acquiring the identifier in the personal electronic device to the location management computer;
and wherein the location management computer is configured to map the identifier of the consumer product with the location of the personal electronic device on the basis of time stamps received from the location tracking system and the personal electronic device.

12. The system of any preceding claim 8 to 11, wherein the personal electronic device comprises a scanner for scanning labels of the consumer products, wherein the personal electronic device is configured to acquire said information identifying the consumer product is acquired by causing the scanner to scan a label of the consumer product, and wherein the location management computer determines the location of the personal electronic device at the time of scanning the label.

13. The system of claim 12, wherein the scanner comprises at least one of the following: a bar code scanner, a smart code scanner, an induction tag scanner, a radio frequency identification tag scanner or a near field communication tag scanner.

14. The system of any preceding claim 8 to 13, wherein the location management computer is configured to update the location of the consumer products of the same type only after receiving at least two indications that the location of the consumer products of the same type has changed.

15. An apparatus for an electronic shopping assistant, comprising:
means for acquiring information from labels of consumer products in a store, said labels identifying the consumer products,
means for acquiring positioning information at the time of each acquisition, said positioning information enabling determination of a location of the apparatus at the time of each acquisition; and
means for transmitting information acquired from a label and identifying the corresponding consumer product and the positioning information to a location management computer for an update of the location of the consumer product.
